# EUROPEAN PATENT APPLICATION

(11) **EP 0 901 312 A2**
(43) Date of publication of application: **10.03.1999**
(21) Application number: 98115574.0
(22) Date of filing: 19.08.1998
(51) Int. Cl.: H05B 33/08

(54) **Lighting device for signaling, in particular for motorcycle helmets**

(30) Priority: 05.09.1997 IT TO970783
(71) Applicant: Amato, Giovanni, 10124 Torino (IT)
(72) Inventor: Amato, Giovanni, 10124 Torino (IT); Prinetto, Giovanni, 10090 Gassino (TO) (IT)
(74) Representative: Robba, Pierpaolo

(57) **Abstract**

A signaling lighting device for motorcycle helmets comprising: signaling light means (21, 23, 25, 27) located on said helmet; a transmitter (1) including means (5) for detecting control signals for energizing said signaling light means, coding means (7) and means (9) for amplifying and transmitting signals (8), and means for generating an emergency blinking for the stop light (21); and a receiving section (3) provided with receiving means (11), decoding means (13) and means for controlling the coherence of the transmitted signals (8), means (17) for driving power stages to energize said light means, and possible means (19) for amplifying said signals (8) and and transmitting them to a second helmet carried by a passenger.

## Description

The present invention relates to a lighting device for signaling purpose, particularly a device to be fitted to motorcycle helmets.

There are known lighting devices for signaling adapted to energize a plurality of light sources positioned on the helmet of a motorcycle rider.

US-A- 4 891 736 discloses an example of such devices comprising a position light, a stop light and a pair of turn indicator lights.

In accordance with the teaching of US-A 4 891 736, the lamps or lights disposed on the rider helmet can be energized by means of suitable control signals that are transmitted either along an electrical cable or through a radio link.

One of the main problems encountered when realizing signaling lighting devices to be located on motorcycle helmets is that of energizing the lights disposed on the helmet in accordance with and in response to control signals available on the motorcycle.

Namely electrical cables can hamper the rider's movements and the communication through them are easily subjected to be interrupted.

On the other hand, radio signals suffer from interference and can in turn become a source of disturbance to other apparatuses.

In an attempt to solve the above mentioned problem of actuating the lights located on the rider helmet in presence of radio signals, USA-A 4 760 373 suggests a lighting device for an helmet in which the light source is energized through radio control signals that are suitably coded to prevent interference from other electric signals.

However with such a solution it is still impractical to independentely control the single lights of a plurality di signaling lights.

Moreover the radio signals for controlling the lights could anyhow cause disturbances to other apparatus located nearby.

WO 93/03305 discloses a lighting device for motorcycle helmets comprising a brake lamp that illuminates under the control of infrared or ultrasonic signals.

Although this solution solves the problem of actuating a device located on the helmet while avoiding environment interference, it does not solve the problem of independently actuating each one of a plurality of signaling devices.

It is therefore an object of the present invenzione to realize a signaling lighting device for a motorcycle rider helmet comprising a plurality of lighting devices that can be independentely controlled without interference problems.

Moreover, the prior art signaling lighting devices only accomplish a mere replication on the rider helmet of the same functions accomplished by the convenzional signaling devices with which the motorcycles are equipped.

Some specific potentially dangerous situations, such as those requiring a sudden and prolonged braking result therefore scarcely perceivable to the driver of a vehicle following behind the motorcycle.

Another object of the present invenzione is to provide a lighting device for signaling to be located on a motorcycle rider helmet, capable to signal and highlight specifica dangerous conditions, such as a sudden and prolonged braking.

A further drawback of the known devices resides in that they are often concealed by a passenger on the motorcycle rear seat.

Moreover, under such circumstances, the known devices causes disturbances to the passenger that is dazzled by the light from the lighting devices located on the driver helmet.

A final but not negligible drawback of the known devices using infrared light for controlling the lights on the helmet, when also the passenger helmet is equipped with a lighting device, is that the passenger helmet - located in a back position with respect to the infrared beam directed towards the driver - will not be able to receive the control signals.

Another object of the present invention is therefore to eliminate the above mentioned drawbacks by providing a lighting device for signaling, particularly for a motorcycle rider helmet, capable of operating even when a passenger is carried on the motorcycle rear seat.

The above mentioned and other objects and advantages of the invenzione, that will become evident in the following description, are accomplished through a signaling lighting device as claimed in the attached claims. Preferred embodiments and unobvious alternate constructions of the present invention are recited in the dependent claims.

The device of the present invention results in being highly safe in conditions of poor visibility and heavy traffic. Such device can be fitted to every type of helmets and provides the rider with a full light source located higher than the vehicle rear lamps.

Thanks to the improved visibility of the stop light, of the position light and of the direction indicator lights, these lights are better detected and the car drivers can easily infer the motorcycle driver intended manoeuvre. This way risky conditions that could arise from the temporary concealement of the signaling lamps on the motorcycle chassis are avoided.

Similar signaling devices can be provided also on the front part of the helmet. Moreover the device is controlled through infrared beams to avoid the presence of electrical wires that could become a source of danger; and finally the device is not prejudicial to the helmet structure since it is provided with adhesive means and is applied on a base of a reflecting material strip.

The present invention will be disclosed with more details through some preferred embodiments, that are illustrated only as not limiting examples in the attached drawings, in which:

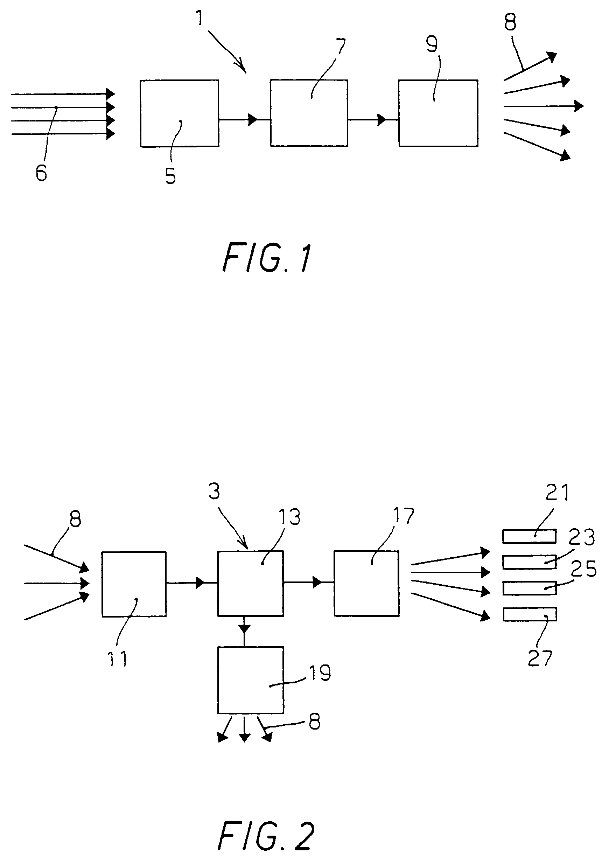

- Figure 1 is a block diagram of the transmitting section of an embodiment of a device according to the present invenzione;
- Figure 2 is a block diagram of the receiving section of an embodiment of a device according to the present invenzione;
- Figure 3 shows the detailed electric circuit of the transmitting section shown in Figure 1; and
- Figure 4 shows the detailed electric circuit of the receiving section shown in Figure 2.

In order to achieve the safety characteristics provided by the device of the present invenzione, the standard lighting devices provided on a motorcycle have been duplicated through other devices located at the most elevated position, i.e. on the rider helmet in the case of a motorcycle, and such devices are remotely controlled by the standard ones.

With reference to the Figures, a signaling lighting device in accodance with the present invention is designed so as to provide the following features:
a) the device illuminates with a red light when the vehicle is braked (stop light);
b) the device permanently illuminates a rear light which is associated with the stop lamp (of a red color);
c) the device can illuminate the direction indicator lights (of orange color);
d) the device can supply a front position light (of a light color).

The stop light is further integrated with an automatic and timed flashing or blinking device to accomplish an automatic emergency blinking when the stop light illuminates uninterruptedly for a predetermined time duration.

Moreover the above illustrated four functions can (possibly) be duplicated in case a passenger is seated behind the driver.

The signaling lighting device for motorcycle helmets of the present invention substantially comprises a transmitting section 1 fitted to the motorcycle and a receiving section 3 fitted to the rider helmet (not shown). This receiving section is located within the helmet when an intercommunication (intercom) system is not provided on the helmet, and outside the helmet when this latter is already equipped with such an intercom system. In this latter situation, the receiving section 3 can be either mounted to the outer surface of the helmet or provided with conventional anchoring means that allows an easy application thereof to the rider's (or the passenger's) suit or clothing.

The transmitting section 1 substantially contains means 5 for detecting pulses 6 controlling the light switching on and off, such control pulses 6 being those commonly generated by pressing the associated devices of the motorcyicle (e.g. the pushbuttons for switching on and off the front lights, the direction indicators lamps, etc.).

The transmitting section 1 further comprises means 7 for coding a signal to be transmitted, which coding means generates a modified signal 8 to be transmitted for energizing the proper light, this modified signal 8 depending on the type of pulse 6 detected by the detecting means 5 and transmitted thereto. Such coding means 7, as better illustrated later on, can further discriminate whether there is present only a driver or also a passenger (and in this latter case a second helmet), so as to energize the lights of the second helmet rather than those of the driver helmet.

The device of the invention further incorporates means 9 for amplifying and transmitting the signal 8, and means (not shown) for generating an emergency blinking of the stop light, after the stop light or lamp has been energized without interruption for a predetermined time interval.

On the other hand, the receiving section 3 substantially comprises means 11 adapted for receiving the above mentioned coded and amplified signal 8, such means being for example in form of conventional sensors; means 13 for decoding the detected signal 8, which means 13 cooperates with means (not shown) for controlling the coherence of signal 8, so as to supply a signal adapted to energize the downstream lights.

The receiving section 3 further includes means 17 capable of driving the downstream power stages to energize the helmet signaling lights, once the proper power stage to be driven has been selected.

Finally the receiving section 3 comprises means 19 for amplifying and transmitting the control signal 8 to a second helmet (not shown) of a passenger. Such means 19 are not in use when only the driver seats on the motorcycle saddle, while it becomes an important feature of the device of the present invenzione when the motorcycle carries a passenger in addition to the driver. Thanks to such additional means and to decision signals generated by the control unit of the device (not shown), the lights on the driver helmet can selectively be excluded (i.e. not illuminated) and the lights on the passenger helmet are automatically energized when a passenger is present. Namely under such circumstances the driver helmet lights could not be seen by the car drivers following behind, and moreover they would disturb the passenger on the rear seat.

Of course the signaling lighting device of the present invention comprises light signaling means disposed on such helmet, which means comprises a number of lights or lamps, namely a brake or stop light 21, a position light 23, a right turn indicator light 25 and a left turn indicator light 27. According to the invention it is further foreseen that the stop light 21 can act as an emergency blinker, as already discussed, when the stop is actuated (and the relevant signal 8 is present) uninterruptedly for more than a predetermined time period. In a practical presently preferred embodiment of the invention, the lights or light sources 21, 23, 25, 27 are formed as conventional miniaturized solid state illuminating devices such as, for example, the well known light emitting diodes (LED), and such lights 21, 23, 25, 27 are applied to the outer surface of the helmet through conventional adhesive means, e.g. a trasparent plastic sheet of an adhesive material.

The two transmitting and receiving sections 1 and 3 of the signaling lighting device according to the invention are separately fed by different power supply sources. It is practical and expedient to feed the transmitting section 1 through conventional battery means (not shown) present on the motorcycle.

On the other hand, for an improved convenience and a better effectiveness of application, the receiving section 3 is fed by conventional battery means (not shown) of the type used for an electric torch disposed on the helmet so as not to hamper the person that wears it.

In order to avoid interference problems both in respect of the signal transmission and reception (as well as with other elettronic devices such as intercom sets, cellular telephones, etc.), and in respect of possible emissions of electromagnetic waves harmful to people health, in the device of the invention the information transmission between the transmitting station 1 and the receiving station 3 is accomplished through coded infrared beams, avoiding the use of connection electric wires that could be dangerous. The infrared rays are suitably modulated and coded so as to prevent interference and mix-up between the several commands. However, the particular method selected to carry out the transmission is not to be considered as limiting the present invention, since other methods accomplishing an equivalent function could be used.

In the presently preferred embodiment, the device of the present invention employs specific non-limiting features such as optically insulated inputs for the commands and a miniaturized solid-state electronic circuitry.

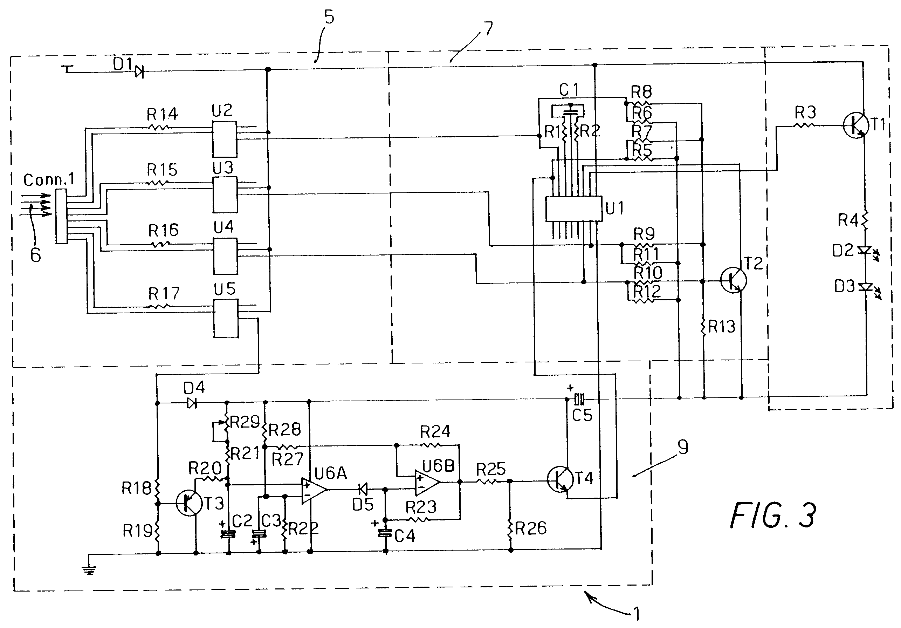

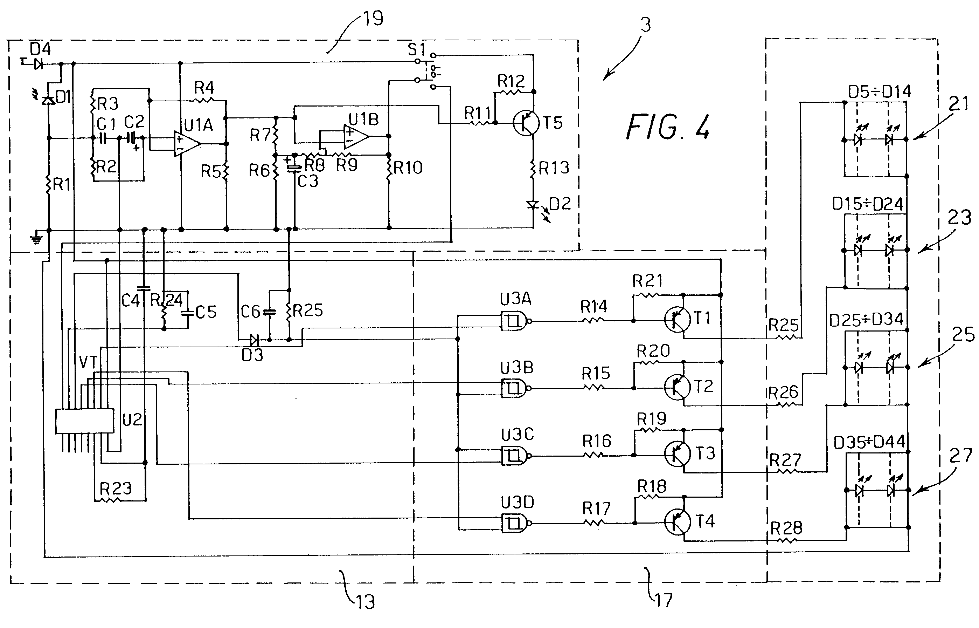

Figures 3 and 4 show two electric circuits being presently preferred, although the invention is not limited to such circuits for being carried out. In the following the components of both Figures will be listed and briefly discussed in respect of their working.

With reference to Fig. 3, illustrating the transmitting section 1 of the device, this latter comprises twenty-eight resistors R1 to R28, a 50 kΩ resistive trimmer R29, a 6,800 pF ceramic capacitor C1, four electrolytic capacitors C2 to C5, a silicon diode D1 of the 1N4005 type, two IR light emitting diodes D2, D3 of the LD274 type, a silicon diode D4 of the 1N4004 type, a silicon diode D5 of the 1N4150 type, an NPN transistor T1 of the BC377 type, an NPN transistor T2 of the BC337 type, an NPN transistor T3 of the BC181 type, an NPN transistor T4 of the BC318 type, an IC coder U1 of the M145026 type, four IC optical couplers U2 to U5 of the TIL111 type, a double IC operational amplifier U6 of the LM358) and an 8 pin connector Conn1.

As for what concerns the working of the transmitting section 1, a connector Conn1 è coupled to the electric circuit of the motorcycle: to Conn1 there are coupled 4 pairs of leads that feed the emitting sections of U2, U3, U4, U5 through resistors R14, R15, R16, R17 with the connector being used for an easy coupling between the circuit and different models of motorcycles. From the motorcycle battery, through diode D1 protecting the circuit against polarity reversals, a 12 V CC voltage is derived that is applied to a pin of U1, to the collector of T1 and to a pin of each sections U2, U3, U4, U5. The control signal from U2 drives the input of U1 and through R8 the base of T2. When T2 is made to conduct a low voltage level is applied to U1 and this latter generates a train of coded pulses that are applied to the base of T1. Transistor T1 through R3 and an emitter resistor R4, drives the IR diodes D2 and D3 which in turn transmit the coded control signal.

The above description of a channel also applies to the other channels, but for the different coding of the pulse train, since a proper input will be used for each channel; it is further to underlie that all the four channels can be used at the same time and in this case the pulse train will be coded by using all the four inputs. The further description refers to the circuit connecting U5 with the emitter of T4, such circuit accomplish the functions of an emergency blinker and being connected to the stop light channel.

When a voltage is firstly applied to the circuit, transistor T4 will become conductive and a continuous ON condition will be present in the channel, as long as the voltage across capacitor C2, being charged through D1, R29, R21, will be lower than 6 Volts. When such voltage exceeds the above threshold level it causes the starting of the oscillator made up by the operational amplifier U2B and by the passive components connected thereto. The oscillator has an operating frequency of about 3 Hz and through R25 it drives the base of T4. The operation of U2B is stopped by the operational amplifier U2A acting as a comparator and controlling the voltage level on its pin that is connected to C2; at the beginning C2 is uncharged beinge short-circuited to ground by T3: if the voltage on C2 is lower than 6 V, the comparator output will be at a 0 (low) logical level and then - through D5 - will maintain U2 at a logical 0 and the oscillator will be blocked. On the other hand, when a voltage higher than 6 Volt is present on the corresponding pin, the output will be at 1 (low) logical level and therefore a positive voltage will be present on such pin and the oscillator will resume oscillating, thus pulse-modulating the relative channel.

With reference to the circuit of Fig. 4, illustrating the receiving section 3 of the device, it comprises twenty-eight resistors from R1 to R28, a 1,000 pF ceramic capacitor C1, two electrolytic capacitors C2, C3, three polyesther capacitors C4 to C6, an IR photodiode D1 of the BPW34 type, an IR emitting diode D2 of the LD274 type, two silicon diodes D3, D4 of the 1N4150 and 1N4004 type, respectively, a set of orange LED diodes D5÷D14, of the SMD type, a set of orange LED diodes D15÷D24 of the SMD type, a set of red LMD diodes D25÷D34 of the SMD type, a set of yellow or green LED diodes D35÷D44 of the SMD type, five PNP transistors T1 to T5 of the BC328 type, a double IC operational amplifier U1 of the LM358 type, an IC decoder U2 of the M145027 type, a digital IC U3 of the CD4093 type, comprising 4 Schmitt Triggers NAND gates, and a miniature double switch S1 for PC board.

As for what concerns the working of the receiving section 3, the pulse train signal received by D1 is detected and filtered by the network formed by R1, R2, R3, C1 and C2, and then amplified by the operational amplifier U1A. The signal at the output of U1 is applied through R11 to the base of T5, which in turn, through its collector and R13, will drive the IR diode D2 for the re-transmission to the passenger helmet, if the switch S1 is properly positioned, i.e it applies the feeding voltage to the emitter of T5.

The signal at the output of U1 is further squared by the second operational amplifier U1B, and such squared signal is applied to U2 through the second branch of switch S1, that will decode it with respect to the connections of its pins. If the pulse train corresponds to such code, the portion of the train containing the channel data is interpreted and the corresponding output is actuated. Moreover, if the key code is exact, the output V is actuated and through D3 will force a high level on one of the two inputs of the 4 NAND gates of U3; the other inputs being connected to the output pins of U2, respectively. When a high level is present on both inputs of the NAND gate, the gate changes the state of its output that through R14, R15, R16, R17, drives the bases of the transistors T1, T2, T3, T4. Through the limiting resistors R25, R26, R27, R28, the transistors apply the feeding voltage to the set of LEDs acting as signaling lights.

The general working of a device according to the present invention will now be briefly disclosed.

When the motorcycle driver actuates the conventional illuminating devices of the motorcycle (for example s/he presses the brakes, or brakes suddenly and in a prolonged manner, or lights one of the two direction indicators before turning right or left, or switches on the vehicle position lights), the energization of the associated actuating device causes the generation of a control signal 6 that is transmitted and is detected by the detecting means 5. Such detecting means 5 is able to recognize the type of the light that has to illuminated and to transfer the proper information to the coding means 7 connected thereto. The coding means 7 codes the information and in turn sends it to the amplifying means 9, that amplifies the information and transmits it to the receiving means 11 of the receiving section 3. The signal sent by the receiving means 11 to the decoding means 13 is decoded and controlled in resspect of coherence by the control means. Thereafter the driving means 17 driving the power stage required to energize the corresponding light 21, 23, 25, 27 is actuated.

When in addition to the driver also a passenger is present on the motorcycle, the control means determines that the signal has to be sent to the amplifying means 19 rather than to the driving means 17 provided on the same helmet. Then the amplifying means 19 transmits such signal to the receiving means 11 of the passenger helmet and from there the signal will be routed along the common path allowing for the energization of the corresponding light 21, 23, 25, 27 on the second passenger helmet.

## Claims

1. A signaling lighting device, particularly one to be located on the helmet of a motorcycle rider, comprising:
- signaling light means (21, 23, 25, 27) located on said helmet;
- a transmitter (1) substantially comprising:
* means (5) for detecting control signals for energizing said signaling light means (21, 23, 25, 27);
* means (7) for generating an infrared signal (8) to be transmitted;
* means (9) for amplifying and transmitting said signal (8); and
- a receiving section (3) substantially comprising:
* means (11) for receiving said signal (8);
* means for controlling the coherence of said signal (8);
* means (17) for driving the power stages for energizing said signaling light means (21, 23, 25, 27), characterized in that said transmitting section (1) further comprises means (7) for coding said signal (8) to be transmitted, and in that said receiving section (3) comprises means (13) for decoding said detected signal (8).

2. A lighting device for signaling as claimed in claim 1, wherein said transmitting section further comprises means for generating an emergency blinking for a stop light (21).

3. A lighting device for signaling as claimed in claim 1 or 2, wherein said receiving section (3) further comprises means (19) for amplifying and transmitting said signal (8) to a second helmet carried by a motorcycle passenger.

4. A lighting device for signaling as claimed in claim 3, wherein said control means are adapted to exclude the energization of said signaling light means located on the driver helmet in case the presence of said second passenger helmet is detected, whereby said control means allows to energize only the signaling light means disposed on said second passenger helmet.

5. A lighting device for signaling as claimed in claim 2 or 3, wherein said transmitting section (1) is fed by feeding means provided on the motorcycle.

6. A lighting device for signaling as claimed in claim 2 or 3, wherein said receiving section (3) is fed by feeding means provided on said helmet.

7. A lighting device for signaling as claimed in claim 6, wherein said feeding means for said receiving section (3) comprises a battery of the type used in an electric torch.

8. A lighting device for signaling as claimed in any of the preceding claims, wherein said signaling light means (21, 23, 25, 27) comprises the following signaling lights:
- a stop light (21);
- a position light (23);
- a right turn indicator light (25);
- a left turn indicator light (27); and
- a blinking emergency light for the stop light (21).

9. A lighting device for signaling as claimed in claim 7, wherein said signaling light means (21, 23, 25, 27) located on said helmet comprises light emitting diodes (LED) applied to the outer surface of said helmet.

10. A motorcycle rider helmet, characterized in that it comprises a signaling light device as claimed in any of the preceding claims.
